# EUROPÄISCHE PATENTANMELDUNG

(11) **EP 3 812 602 A1**
(43) Veröffentlichungstag der Anmeldung: **28.04.2021**
(21) Anmeldenummer: 20203358.5
(22) Anmeldetag: 22.10.2020
(51) Int. Cl.: F16B 47/00, F16M 13/02, B60R 11/02

(54) **SAUGNAPFVORRICHTUNG UND HALTEVORRICHTUNG**

(30) Priorität: 23.10.2019 DE 102019128671
(71) Anmelder: Herberger, Thomas, 91083 Baiersdorf (DE)
(72) Erfinder: Herberger, Thomas, 91083 Baiersdorf (DE)
(74) Vertreter: Schlögl, Markus

(57) **Zusammenfassung**

Die Erfindung betrifft eine Saugnapfvorrichtung (2), insbesondere Saugnapfvorrichtung (2) für eine Haltevorrichtung für ein portables elektronisches Gerät, zum Aufsetzen auf eine glatte Oberfläche (200), insbesondere eine Glasscheibe, umfassend:
- ein Gehäuse (4) mit einem ersten Durchloch (24) und einem Rand (22),
- ein elastisches Element (6), welches teilweise innerhalb des Gehäuses (4) angeordnet ist und ein zweites Durchloch (26) aufweist, welches fluchtend mit dem ersten Durchloch (24) angeordnet ist,
- eine Spindel (8) und
- ein mit der Spindel (8) an einem Ende verbundenes erstes plattenförmiges Element (10), welches innerhalb des Gehäuses (4) angeordnet ist,
wobei die Spindel (8) sich durch das erste und zweite Durchloch (24, 26) erstreckt und die Saugnapfvorrichtung (2) so ausgelegt ist, dass mittels der Spindel (8) das erste plattenförmige Element (10) so gegen das elastische Element (6) in Richtung des Gehäuses (4) gezogen wird, dass zwischen der glatten Oberfläche (200) und dem elastischen Element (6) ein Unterdruck entsteht.

Weiterhin betrifft die Erfindung eine Haltevorrichtung.

## Beschreibung

Die Erfindung betrifft eine Saugnapfvorrichtung, insbesondere für eine Haltevorrichtung für ein portables elektronisches Gerät, und eine Haltevorrichtung.

Die bekannten Haltevorrichtungen existieren in zwei Grundformen. Nach dem ersten Typ weisen diese Haltevorrichtungen einen Saugnapf auf, welcher im Nichtbenutzungszustand eine Napfform aufweist. Nach dem zweiten Typ weist die Haltevorrichtung einen Saugnapf auf, der im Nichtbenutzungszustand annähernd eben ist.

In beiden Bauformen weist der Saugnapf eine Innenseite mit einem Dichtrand und eine Außenseite auf. Auf der Außenseite ist in einem zentralen Bereich zumeist eine Anlenkung, z.B. in Form eines Schaftes, entweder eingeformt oder als separates Bauteil vom Saugnapf zumindest teilweise umschlossen.

Die Betätigung der Haltevorrichtung nach dem ersten Typ erfolgt durch das Aufpressen des Saugnapfs auf eine ebene Fläche, sodass der Napf zuerst flach gedrückt wird und anschließend durch seine Rückstellkraft einen inneren Bereich mit einem Unterdruck entstehen lässt. Bei der Haltevorrichtung nach dem zweiten Typ wird der annähernd ebene Napf auf eine ebene Fläche aufgesetzt und anschließend, zum Beispiel durch Betätigung eines Exzenterhebels, derart verformt, dass ein innerer Bereich mit einem Unterdruck entsteht. Der Umgebungsdruck sorgt nun dafür, dass der Saugnapf mit einer Kraft entsprechend der Druckdifferenz beaufschlagt wird, die diesen auf die ebene Fläche drückt. Alternativ zum Excenterhebel kann auch ein Drehbetätigungsmittel vorgesehen sein, welches durch eine Drehbewegung um einen vorgegebenen Winkel zwischen einer Ansaugposition und einer Löseposition betätigt wird. Zum Lösen des Saugnapfes nach ersten Typ ist bei einem solchen meist eine Lasche am Rand des Saugnapfes vorhanden, welche genutzt werden kann, um die Wirkung des Dichtrands aufzuheben. Beim zweiten Typ genügt meist die Aufhebung der Deformation des Saugnapfes, zum Beispiel durch Rückstellen des Exzenterhebels.

Nachteil der bekannten Haltevorrichtungen ist, dass ein relativ komplizierter Saugnapf benötigt wird. Weiterer Nachteil ist, dass zur Bedienung des vorgenannten Hebels relativ viel Platz benötigt wird, so dass eine Positionierung der Haltevorrichtung an der Windschutzscheibe eingeschränkt ist. Nachteil des bekannten Drehbetätigungsmittels ist, dass bei einer komfortablen Bedienbarkeit nur eine geringe bzw. begrenzte Saugkraft zur Verfügung steht.

Aufgabe der Erfindung ist es, die Nachteile nach dem Stand der Technik zu beseitigen. Insbesondere soll eine verbesserte Saugnapfvorrichtung angegeben werden. Weitere Aufgabe der Erfindung ist es, eine Haltevorrichtung mit der Saugnapfvorrichtung anzugeben.

Die Aufgabe der Erfindung wird durch den Gegenstand des Anspruchs 1 hinsichtlich der Saugnapfvorrichtung, durch den Gegenstand des Anspruchs 12 hinsichtlich der Haltevorrichtung gelöst. Zweckmäßige Ausgestaltungen ergeben sich aus den abhängigen Ansprüchen.

Die erfindungsgemäße Saugnapfvorrichtung, insbesondere Saugnapfvorrichtung für eine Haltevorrichtung für ein portables elektronisches Gerät, zum Aufsetzen auf eine glatte Oberfläche, insbesondere eine Glasscheibe, umfasst
- ein Gehäuse mit einem ersten Durchloch und einem äußeren Rand,
- ein elastisches Element, welches teilweise innerhalb des Gehäuses angeordnet ist und ein zweites Durchloch aufweist, welches fluchtend mit dem ersten Durchloch angeordnet ist,
- eine Spindel und
- ein mit der Spindel an einem ersten Ende verbundenes erstes plattenförmiges Element, welches innerhalb des Gehäuses angeordnet ist,
wobei die Spindel sich durch das erste und zweite Durchloch erstreckt und die Saugnapfvorrichtung so ausgelegt ist, dass mittels der Spindel das erste plattenförmige Element so gegen das elastische Element in Richtung des Gehäuses gezogen wird, dass zwischen der glatten Oberfläche und dem elastischen Element ein Unterdruck entsteht.

Das Gehäuse ist zweckmäßigerweise schalenförmig. Das Gehäuse kann beispielsweise aus Kunststoff oder Metall ausgebildet sein. Das erste Durchloch ist vorzugsweise mittig in dem Gehäuse ausgebildet. Das erste Durchloch kann mit oder ohne Gewinde für die Spindel ausgestaltet sein. Das elastische Element ist insbesondere ein plattenförmiges Element, insbesondere eine Membran. Das elastische Element erstreckt sich zu einem äußeren Rand des Gehäuses hinaus, so dass im Funktionszustand zwischen dem elastischen Element und dem äußeren Rand des Gehäuses optional eine umlaufende Kontaktfläche ausgebildet wird.

Die Spindel erstreckt sich durch das erste Durchloch des Gehäuses und das zweite Durchloch des elastischen Elements. Das elastische Element ist somit zwischen dem ersten plattenförmigen Element und dem Gehäuse angeordnet. Zwischen dem ersten plattenförmigen Element und dem elastischen Element bildet sich im Funktionszustand eine erste Dichtfläche aus.

Der Vorteil der erfindungsgemäßen Vorrichtung ist, dass das elastische Element durch eine einfache Lochmembran realisiert werden kann. Die Herstellung ist einfach und kostengünstig. Des Weiteren ist die erfindungsgemäße Saugnapfvorrichtung auch bei beengten Platzverhältnissen sowohl zum Aufbringen als auch zum Lösen komfortabel handhabbar.

Beim Überführen der Saugnapfvorrichtung aus einem Nichtbenutzungszustand, in dem das erste plattenförmige Element nicht oder nur locker mit dem elastischen Element in Kontakt ist, in den Funktionszustand, bei dem das erste plattenförmige Element gegen das elastische Element gedrückt wird und die erste Dichtfläche ausgebildet wird, führt die Spindel insbesondere eine Längsbewegung aus, so dass ein Abstand zwischen zweitem Ende der Spindel, welches dem ersten Ende der Spindel gegenüberliegt, und dem Gehäuse vergrößert wird. Diese Längsbewegung, welche die Spindel beim Überführen aus dem Nichtbenutzungszustand in den Benutzungszustand oder auch Funktionszustand vollzieht, kann dazu verwendet werden, um die Saugnapfvorrichtung einzukeilen und/oder klemmend zu fixieren.

Bei Verwendung der Saugnapfvorrichtung an einer Windschutzscheibe eines Fahrzeugs mit üblichen Geometrien kann somit das zweite Ende der Spindel genutzt werden, um die Saugnapfvorrichtung gegen eine Fläche des Fahrzeugs (zum Beispiel die Oberseite des Armaturenbretts), welche insbesondere lokal reversibel verformbar ist, oder ein Fixierelement zu verspannen.

In Ausgestaltung ist das elastische Element ein kreisförmiges Element, welches insbesondere aus einem Gummi oder Gummi-ähnlichen Material hergestellt ist. Das elastische Element ist insbesondere aus einem transluzenten oder transparenten Material hergestellt. Zweckmäßigerweise ist das elastische Element so angeordnet, dass das elastische Element und ein äußerer Rand des Gehäuses zumindest teilweise, insbesondere vollständig überlappt. Die Randform des Gehäuses und die Form der Kontaktfläche sind in diesem Fall zweckmäßigerweise auch kreisförmig. Alternativ können Gehäuse und elastisches Element aber auch eine ovale Form oder mehreckige Form aufweisen. Wenn das elastische Element aus einem transluzenten oder transparenten Material ausgebildet ist, ist eine innere Oberfläche des Gehäuses durch das elastische Element sichtbar und eignet sich beispielsweise zum Anbringen eines Logos oder Kennzeichens. Weiterhin kann auch die vom elastischen Element abgewandte Seite des ersten plattenförmigen Elements zum Anbringen eines Logos oder Kennzeichens unabhängig von einer Transparenz des elastischen Elements genutzt werden. Ein weiterer Vorteil des Anbringens eines Logos oder Kennzeichens auf dem plattenförmigen ersten Element statt auf einem elastischen Element ist, dass das Kennzeichen oder Logo nicht zwischen Benutzungszustand und Nichtbenutzungszustand verzerrt wird und somit auch langlebiger ist. Wenn die glatte Oberfläche zum Aufsetzen des Saugnapfhalters z.B. eine Glasscheibe oder andere transparente Fläche ist, wäre das Logo oder Kennzeichen auch durch die Glasscheibe oder andere transparente Fläche, z.B. durch die Windschutzscheibe eines Fahrzeugs, sichtbar.

In Ausgestaltung weist das erste plattenförmige Element eine Kreisform auf, wobei das plattenförmige Element vorzugsweise aus einem Kunststoff oder Metall gebildet ist. Durch eine Kreisform werden Kanten vermieden, die das elastische Element beschädigen können und somit zu einer verminderten Dichtwirkung führen. Zweckmäßigerweise ist das plattenförmige Element mit der Spindel einstückig. Die Spindel weist zweckmäßigerweise vollständig oder zumindest teilweise ein Gewinde auf. Die Spindel kann beispielsweise in einem vorderen Bereich, der zum ersten plattenförmigen Element hin ausgerichtet ist, kein Gewinde aufweisen und in einem hinteren Bereich ein Gewinde aufweisen. Insbesondere kann sie in einem Bereich, der sich durch das Durchloch des elastischen Elements erstreckt, kein Gewinde aufweisen. Sie kann als Gewindespindel ausgestaltet sein. Gerade bei einer Ausgestaltung als Gewindespindel kann ein mechanisches Spiel im Benutzungszustand eliminiert werden. Weiterer Vorteil dieser Ausgestaltung ist, dass ein Hub des ersten plattenförmigen Elements den Einsatzbedingungen und Änderungen der Elastizität des elastischen Elements z.B. über die Lebensdauer der Saugnapfvorrichtung einfach angepasst werden kann und so eine höhere Zuverlässigkeit erreicht wird.

In weiterer Ausgestaltung ist zwischen dem elastischen Element und dem Gehäuse ein drittes plattenförmiges Element angeordnet. Das dritte plattenförmige Element weist insbesondere ein viertes Durchloch auf, welches fluchtend mit dem ersten Durchloch angeordnet ist und von der Spindel durchgriffen wird. Zweckmäßigerweise ist das dritte plattenförmige Element bezüglich einer Erstreckungsrichtung der Spindel fixiert. Das dritte plattenförmige Element ist vorzugsweise aus einem Kunststoff oder Metall gebildet. Weiter vorzugsweise weist das dritte plattenförmige Element eine Kreisform auf. Das dritte plattenförmige Element hat den Vorteil, dass es einer Verformung des elastischen Elements entgegenwirken kann, insbesondere das elastische Element wieder in eine flache Form bringen kann. Eine solche Verformung kann im Benutzungszustand unter Wärmeeinwirkung oder Strahlungseinwirkung auftreten. Z.B. kann bei der Benutzung der Saugnapfvorrichtung an der Windschutzscheibe eines Fahrzeuges sich das elastische Element durch die Sonneneinstrahlung mit der Zeit verformen. Mittels des dritten plattenförmigen Elements kann das elastische Element flach gegen die Windschutzscheibe gedrückt werden, um sowohl das Bringen in den Benutzungszustand als auch das Bringen in den Nicht-Benutzungszustand zu vereinfachen.

In Ausgestaltung weist die Spindel an einem zweiten Ende ein Kugelelement auf. Das Kugelelement kann zur Befestigung einer Haltevorrichtung, insbesondere als Teil eines Kugelgelenks, dienen. Das Kugelelement kann zum einen zur Betätigung der Spindel genutzt werden, wenn das erste Durchloch mit einem Gewinde versehen ist. Alternativ oder zusätzlich ist die Spindel an einem zweiten Ende geeignet, mit einem Fixierelement in Eingriff gebracht zu werden. Das Fixierelement ist insbesondere geeignet, am Armaturenbrett, an Lüftungsschlitzen, insbesondere im Bereich der Windschutzscheibe, eines Fahrzeuges oder weiteren Vertiefungen, insbesondere im Bereich der Windschutzscheibe eines Fahrzeuges, lösbar befestigt zu werden. Das Fixierelement ist zweckmäßigerweise ein Formstück, welches Öffnungen, Vor- oder Rücksprünge der entsprechenden Fläche ausnutzt und zumindest teilweise formschlüssig mit der entsprechenden Fläche verbunden wird. Hierdurch wird eine besondere Zuverlässigkeit erreicht, da die Haltekraft der Saugnapfvorrichtung nicht ausschließlich von der Güte der Dichtung und der Höhe der Druckdifferenz abhängt, sondern insbesondere zusätzlich klemmend und/oder formschlüssig gehalten wird.

In weiterer Ausgestaltung umfasst die Saugnapfvorrichtung ein Betätigungselement, welches zweckmäßigerweise ein Durchloch mit einem Gewinde aufweist, wobei das Betätigungselement zwischen dem Gehäuse und dem zweiten Ende auf der Spindel angeordnet ist. Das Betätigungselement kann als mit Griffelementen versehene Mutter, z.B. Flügelmutter oder Rändelmutter, ausgestaltet sein.

In Ausgestaltung ist das elastische Element mit dem Gehäuse im auf eine glatte Oberfläche aufgesetzten Zustand kraftschlüssig verbindbar.

Zweckmäßigerweise weist das Gehäuse an einer vom elastischen Element abgewandten Seite einen um das Durchloch umlaufenden Vorsprung auf oder ist auf dem Gehäuse ein zweites plattenförmiges Element mit einem dritten Durchloch angeordnet, wobei das dritte Durchloch fluchtend mit dem ersten und zweiten Durchloch ausgerichtet ist. Der umlaufende Vorsprung bzw. das zweite plattenförmige Element verbessert insbesondere die Bedienbarkeit des Betätigungselements.

Die Spindel weist im Bereich des zweiten Endes eine oder mehrere Befestigungsmöglichkeiten insbesondere zur schraubbaren Befestigung von je einem weiteren Element auf, wobei das weitere Element zweckmäßigerweise mit einem Kugelelement versehen ist. Dazu können an der Spindel in einer Ausgestaltung Bohrungen, insbesondere Gewindebohrungen, vorhanden sein, in die jeweils ein weiteres Element eingeschraubt werden kann. In einer anderen Ausgestaltung sind an der Spindel Vertiefungen oder Einkerbungen vorhanden, in denen ein weiteres Element klemmend befestigt werden kann.

In Ausgestaltung kann das Gehäuse eine oder mehrere Bohrungen, insbesondere mit einem Gewinde ausgestaltete Bohrungen, umfassen, welche zweckmäßigerweise in einem mittleren Bereich zwischen dem ersten Durchloch und dem äußeren Rand des Gehäuses befinden. Die Bohrungen können als Durchloch oder als Sackloch ausgestaltet sein. Die eine oder mehrere Bohrungen ist insbesondere zur Befestigung eines stabförmigen Elements, insbesondere eines stabförmigen Elements, welches am vom Gehäuse wegweisenden Ende ein Kugelelement aufweist, ausgelegt. Ein solches stabförmiges Element kann z.B. in das Gehäuse eingeschraubt werden.

Zweckmäßigerweise ist eine solche Bohrung oder ein entsprechendes stabförmiges Element mit einem Anschlag versehen, so dass das stabförmige Element nicht das elastische Element beschädigen oder in seiner Funktion behindern kann. In dieser Ausgestaltung eignet sich die Saugnapfvorrichtung gerade auch für beengte Verhältnisse zum Beispiel im unteren Bereich einer Windschutzscheibe, bei der durch die Bohrung eine Last exzentrisch an der Saugnapfvorrichtung angebracht werden kann und somit der Platz optimiert ausgenutzt werden kann.

Sowohl über eine oder mehrere Befestigungsmöglichkeiten an der Spindel als auch über das Vorsehen der Bohrungen am Gehäuse können zum Beispiel mehrere Halteelemente für elektronische portable Geräte vorgesehen werden oder auch mehrere Saugnapfvorrichtungen miteinander verbunden werden.

Die erfindungsgemäße Haltevorrichtung für ein elektronisches portables Gerät, insbesondere ein Navigationsgerät, mit einem als Saugnapfvorrichtung nach einer der obigen Ausgestaltungen mit einem Kugelelement, wobei mit dem Befestigungselement, insbesondere mit der Spindel der Saugnapfvorrichtung, insbesondere mit dem Kugelelement, ein Arm mit einem ersten Ende gelenkig verbunden ist, wobei an einem zweiten Ende des Arms ein Halteelement für das elektronische portable Gerät vorgesehen ist, wobei der Arm aus einem oder mehreren Verbindungselementen besteht oder zumindest ein Verbindungselement umfasst.

Zweckmäßigerweise ist der Arm mit dem Halteelement über ein Kugelgelenk verbunden.

In Ausgestaltung weist der Arm zumindest ein weiteres Gelenk, insbesondere Kugelgelenk auf, welches in einem mittleren Abschnitt des Armes vorgesehen ist.

Das Halteelement kann eine Klemmvorrichtung sein, wobei die Klemmvorrichtung zweckmäßigerweise eine Grundplatte und auf zwei sich gegenüberliegenden Seiten zumindest je einen Klemmfinger umfasst. Insbesondere umfasst die Grundplatte genau drei Klemmfinger, welche auf zwei sich gegenüberliegenden Seiten angeordnet sind.

In Ausgestaltung umfasst der Arm ein Verbindungselement mit zwei sich gegenüberliegenden plattenförmigen Armelementen, welche jeweils an den Endabschnitten U-förmige oder C-förmige Ausnehmungen umfassen, wobei mit den sich gegenüberliegenden U-förmigen oder C-förmigen Ausnehmungen jeweils ein Kugelelement so gehalten wird, dass die zwei plattenförmigen Armelemente mit dem Kugelelement ein Kugelgelenk bilden. Ein Abstand der sich gegenüberliegenden plattenförmigen Armelemente kann durch eine Stellschraube begrenzt werden.

In Ausgestaltung umfasst die Haltevorrichtung weiterhin ein Fixierelement, welches mit der Spindel am zweiten Ende in Eingriff gebracht werden kann, wobei das Fixierelement zumindest ein Fixiermittel aufweist, um am Armaturenbrett, an oder in Lüftungsschlitzen, insbesondere im Bereich der Windschutzscheibe, eines Fahrzeuges oder weiteren Vertiefungen, insbesondere im Bereich der Windschutzscheibe, eines Fahrzeuges lösbar befestigt zu werden, und einen Eingriffsbereich aufweist, mit dem die Spindel am zweiten Ende in Eingriff gebracht werden kann.

Dabei kann das Fixiermittel einen Vorsprung oder Haken umfassen, welcher dazu ausgelegt ist, in einen Lüftungsschlitz im Bereich der Windschutzscheibe einzugreifen oder einzuhaken. Alternativ oder zusätzlich ist der Eingriffsbereich U-Förmig ausgestaltet ist, so dass das Kugelelement der Spindel damit in Eingriff gebracht werden kann.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Prinzipskizze:
- Fig. 1a:: Schnittdarstellung durch eine erste Ausgestaltung einer erfindungsgemäßen Saugnapfvorrichtung,
- Fig. 1b:: Schnittdarstellung durch eine zweite Ausgestaltung einer erfindungsgemäßen Saugnapfvorrichtung,
- Fig. 1c:: Schnittdarstellung durch eine dritte Ausgestaltung einer erfindungsgemäßen Saugnapfvorrichtung,
- Fig. 2:: erste Ansicht einer erfindungsgemäßen Haltevorrichtung,
- Fig. 3:: zweite Ansicht einer erfindungsgemäßen Haltevorrichtung und
- Fig. 4:: zweite Ausgestaltung einer Haltevorrichtung.

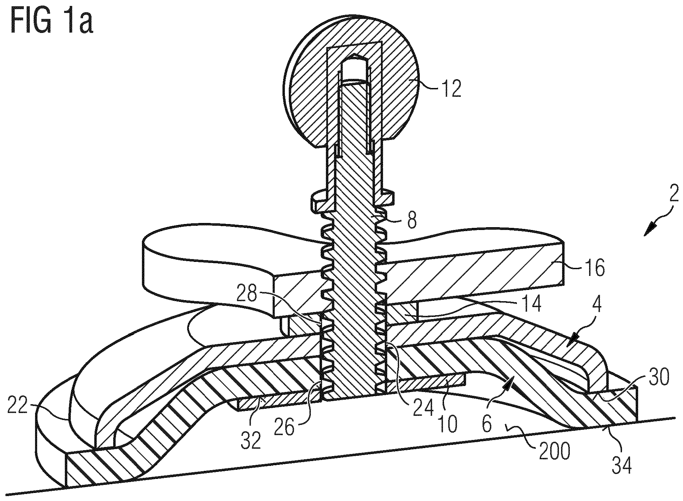

Fig. 1a zeigt eine Schnittdarstellung einer erfindungsgemäßen Saugnapfvorrichtung 2 in einer ersten Ausgestaltung. Die Saugnapfvorrichtung 2 umfasst ein Gehäuse 4, ein elastisches Element 6 und eine Spindel 8, die mit einem ersten plattenförmigen Element 10 an einem ersten Ende versehen ist. Das elastische Element 6 erstreckt sich über einen äußeren Rand 22 des Gehäuses 4 hinaus.

Wenn die Saugnapfvorrichtung 2 auf eine glatte Oberfläche 200 aufgesetzt wird, liegt das elastische Element 6 mit einer ersten Seite zumindest teilweise auf der glatten Oberfläche 200 auf. Mit der Spindel 8 wird das erste plattenförmige Element 10 gegen das elastische Element 6 gepresst und ein umlaufender Rand 22 des Gehäuses 4 wird gegen eine der ersten Seite gegenüberliegende zweite Seite des elastischen Elements 6 gepresst. Damit entsteht eine Kontaktfläche 30 zwischen dem umlaufenden Rand 22 des Gehäuses 4 und dem elastischen Element 6. Eine erste Dichtfläche 32 entsteht zwischen dem elastischen Element 6 und dem ersten plattenförmigen Element 10. Eine zweite Dichtfläche 34 wird schließlich zwischen dem elastischen Element 6 und einer glatten Oberfläche 200, auf die die Saugnapfvorrichtung 2 aufgesetzt ist, gebildet, so dass zwischen der glatten Oberfläche 200 und einem Innenraum des Gehäuses 4, d.h. des elastischen Elements 6 und dem ersten plattenförmigen Element 10, ein Unterdruck erzeugt werden kann.

Auf der dem elastischen Element 6 gegenüberliegenden Seite ist auf dem Gehäuse 4 ein zweites plattenförmiges Element 14 angeordnet. Das zweite plattenförmige Element 14 weist ein drittes Durchloch 28 auf, welches fluchtend mit dem zweiten Durchloch 26 ausgerichtet ist. Durch das dritte Durchloch 28 erstreckt sich ebenfalls die Spindel 8. Auf der Spindel 8 ist weiterhin ein Betätigungselement 16 und ein Kugelelement 12 angeordnet. Das Betätigungselement 16 weist ein Durchloch mit Gewinde auf, so dass durch das Betätigungselement 16 ein Abstand zwischen Betätigungselement 16 und erstem plattenförmigen Element 10 eingestellt werden kann. Wenn die Saugnapfvorrichtung 2 somit auf eine glatte Oberfläche 200 aufgesetzt ist, kann durch Verringern des Abstands zwischen Betätigungselement 16 und dem ersten plattenförmigen Element 10 das elastische Element 6 zu einer Innenseite des Gehäuses 4 gezogen werden und somit ein Unterdruck erzeugt werden, der die Saugnapfvorrichtung 2 gegen die glatte Oberfläche 200 zieht. Bei Betätigen des Betätigungselements 16 vergrößert sich gleichzeitig der Abstand zwischen dem zweiten Ende der Spindel 8, insbesondere dem Kugelelement 12, und dem Gehäuse 4 und damit auch zur glatten Oberfläche 200. Die Spindel selbst führt damit eine Längsbewegung relativ zum Gehäuse 4 aus. Diese Längsbewegung kann ausgenutzt werden, um die Saugnapfvorrichtung zusätzlich gegen eine Oberfläche mit dem Kugelelement 12 zu klemmen.

Durch Vergrößern des Abstandes zwischen Betätigungselement 16 und dem ersten plattenförmigen Element 10 entfernt sich das elastische Element 6 von der Innenseite des Gehäuses 4 und der Unterdruck wird verringert, so dass die Saugnapfvorrichtung 2 bequem von der glatten Oberfläche 200 abgelöst werden kann. Das zweite Ende der Spindel 8 nähert sich wieder dem Gehäuse 4 an und führt die Längsbewegung in entgegengesetzter Richtung aus. Wenn die Saugnapfvorrichtung 2, wie oben beschrieben, zusätzlich gegen eine Oberfläche mit dem Kugelelement 12 geklemmt wurde, wird durch die Längsbewegung in entgegengesetzter Richtung die Klemmwirkung wieder aufgehoben.

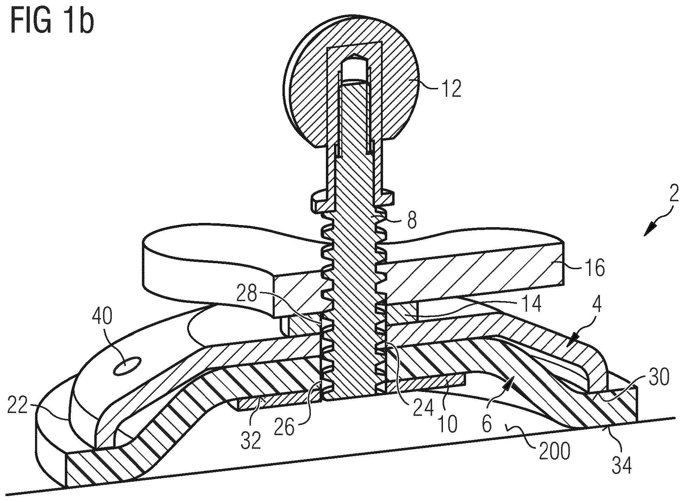

Fig. 1b zeigt eine zweite Ausgestaltung der Saugnapfvorrichtung. In dieser zweiten Ausgestaltung weist das Gehäuse 4 zwischen dem ersten Durchloch 24 und dem Rand 22 zumindest eine Bohrung 40 auf. Es können mehrere Bohrungen 40, insbesondere kreisförmig, um das erste Durchloch 24 angeordnet sein. Die Bohrung 40 ist vorzugsweise mit einem Gewinde versehen, so das ein stabförmiges Element in die Bohrung 40 eingeschraubt werden kann, an dem z.B. ein Halteelement zur Aufnahme eines elektronischen Gerätes befestigt werden kann.

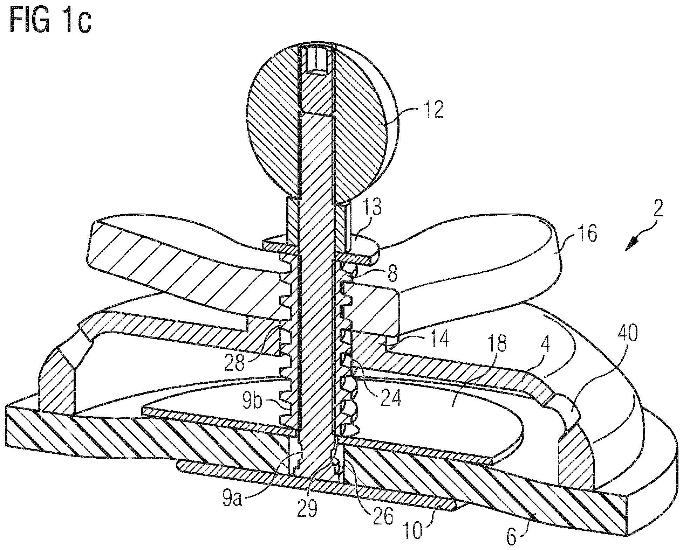

Fig. 1c zeigt eine dritte Ausgestaltung der Saugnapfvorrichtung 2. In dieser dritten Ausgestaltung ist zwischen dem Gehäuse 4 und dem elastischen Element 6 ein drittes plattenförmiges Element 18 angeordnet. Das dritte plattenförmige Element 18 ist mit einem vierten Durchloch 29 versehen, welches fluchtend mit dem ersten Durchloch 24 angeordnet ist. Die Spindel 8 durchgreift das dritte plattenförmige Element 18. In dieser Ausgestaltung weist die Spindel 8 einen vorderen Bereich 9a und einen hinteren Bereich 9b auf. Der vordere Bereich 9a, welcher sich durch das elastische Element 6 erstreckt, ist hier ohne Gewinde ausgeführt und weist einen geringeren Durchmesser auf, als der hintere Bereich 9b, welcher mit einem Gewinde ausgeführt ist und sich durch das erste Durchloch 24 des Gehäuses 4 erstreckt. Das vierte Durchloch 29 ist hier vom Durchmesser so gewählt, dass es nur im vorderen Bereich 9a beweglich ist. Auch die dritte Ausgestaltung kann optional, wie hier gezeigt, Bohrungen 40 aufweisen. Weiterhin kann das Kugelelement 12 einen zum Gehäuse 4 hinweisenden Anschlag 13 aufweisen.

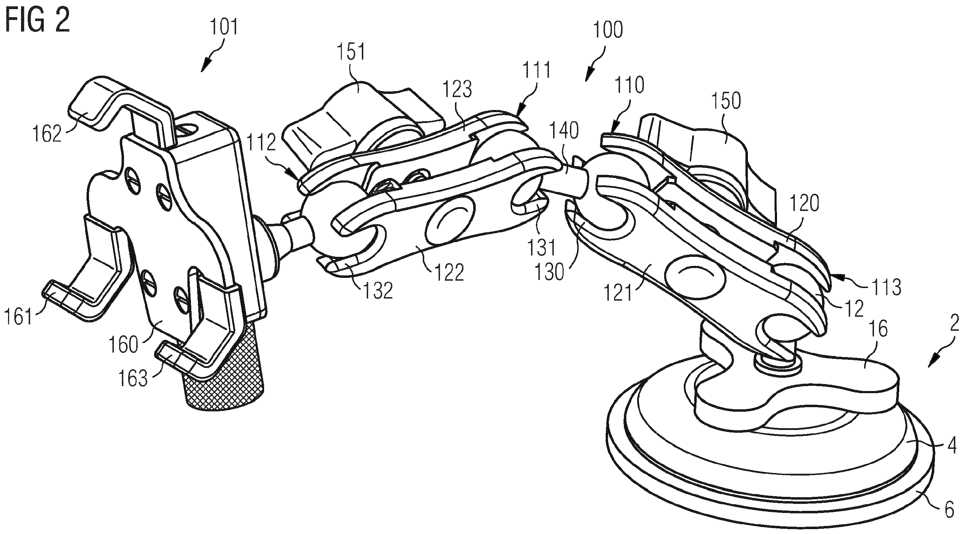

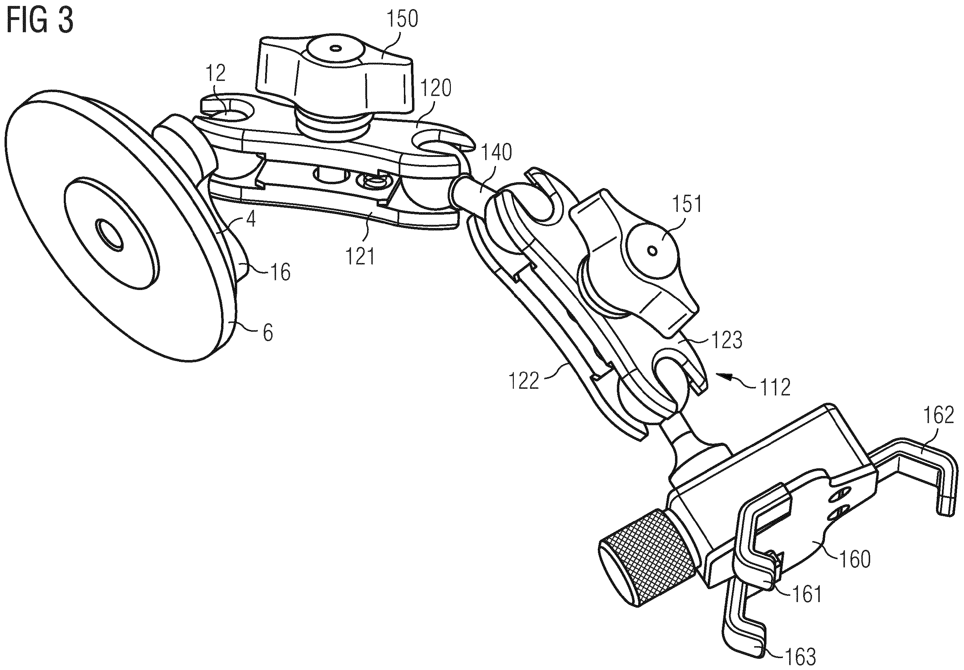

Fig. 2 und Fig. 3 zeigen Ansichten einer erfindungsgemäßen Haltevorrichtung für ein portables elektronisches Gerät. Die Haltevorrichtung umfasst eine Saugnapfvorrichtung 2, einen Arm 100 und eine Klemmvorrichtung 101, wobei der Arm 100 die Saugnapfvorrichtung 2 mit der Klemmvorrichtung 101 verbindet.

Der Arm 100 umfasst in der dargestellten Ausführungsform vier Kugelgelenke. Das erste Kugelgelenk 113 ist die Verbindung zwischen Saugnapfvorrichtung 2 und dem Arm 2 und ist aus dem Kugelelement 12 und zwei plattenförmigen Armelementen 120, 121 gebildet, die jeweils eine C-förmige Ausnehmung aufweisen, in der das Kugelelement 12 teilweise aufgenommen ist. Ein Abstand zwischen den plattenförmigen Armelementen 120, 121 wird durch eine Stellschraube 150 begrenzt.

Zwei weitere Kugelgelenke 110, 111 sind durch die plattenförmigen Armelemente 120, 121 sowie plattenförmige Armelemente 122, 123 und eine aus den Kugelelementen 130 und 131 gebildete Doppelkugel 140 gebildet, wobei die plattenförmigen Armelemente 120, 121, 122, 123 auf einer jeweils zur Doppelkugel 140 zugewandten Seite eine C-förmige Ausnehmung aufweisen. Ein Abstand zwischen den plattenförmigen Armelementen 122, 123 wird ebenfalls durch eine Stellschraube 151 begrenzt.

Ein weiteres Kugelgelenk 112 ist zwischen dem Arm 100 und der Klemmvorrichtung 101 angeordnet. Dieses umfasst das Kugelelement 132 und die plattenförmigen Armelemente 120, 121, die auch jeweils eine zum Kugelelement 112 weisende C-förmige Ausnehmung aufweisen.

Die Klemmvorrichtung 101 weist eine Grundplatte 160 sowie drei Klemmfinger 161, 162 und 163 auf. Dabei ist der Klemmfinger 162 gegenüberliegend zu den Klemmfingern 161 und 163 so angeordnet, dass ein elektronisches portables Gerät, insbesondere ein Navigationsgerät, mit den Klemmfingern sicher und zuverlässig gehalten werden kann. Die Klemmfinger 161, 162, 163 können eine fixen oder einstellbaren Abstand zueinander aufweisen. Die Haltevorrichtung wird mit der Saugnapfvorrichtung 2 z.B. an der Windschutzscheibe eines Fahrzeugs angebracht werden. Über den Arm 100 kann eine Position, Ausrichtung und Neigung einfach und komfortabel eingestellt werden.

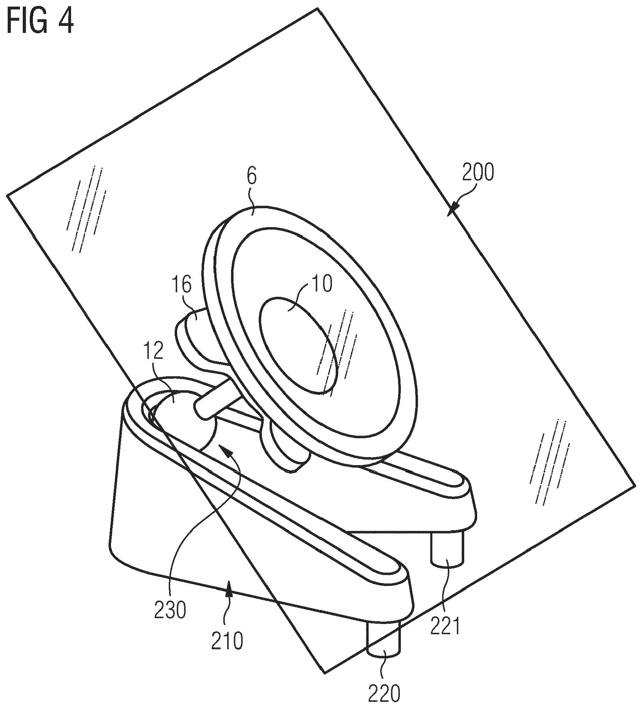

Fig. 4 zeigt eine weitere Ausführungsform der Haltevorrichtung. Die Haltevorrichtung umfasst neben der Saugnapfvorrichtung 2 ein Fixierelement 210. Das Fixierelement 210 ist im vorliegenden Fall als Formteil ausgebildet, welches auf einem Armaturenbrett eines Fahrzeugs aufliegt. Das Formteil weist zumindest ein Fixiermittel, hier zwei Fixiermittel 220, 221 auf, welche als Vorsprünge ausgebildet sind, die in der Abbildung in einen Lüftungsschlitz der Windschutzscheibe eingreifen. Weiterhin weist das Fixierelement 210 einen U-förmig ausgestalteten Eingriffsbereich 230 auf. Im eingebauten Zustand ist die Saugnapfvorrichtung 2 mit dem elastischen Element 6 gegen die glatte Oberfläche 200 in Form der Windschutzscheibe des Fahrzeugs von einer Innenseite des Fahrzeugs aufgesetzt. Das erste plattenförmige Element 10 ist mit dem Betätigungselement gegen das elastische Element 6 gezogen. Somit hat sich das Kugelelement 12 von der glatten Oberfläche 200 und dem nicht sichtbaren Gehäuse 4 entfernt. Das Kugelelement 12 ist mit der Eingriffsfläche 230 des Fixierelements 210 dabei in Eingriff gebracht worden, so dass zusätzlich zur durch den Unterdruck erzeugten Haltekraft gegen die glatte Oberfläche 200 die Saugnapfvorrichtung 2 zwischen der glatten Oberfläche 200 und dem Eingriffsbereich 230 des Fixierelements 210 klemmend gehalten ist. Die Saugnapfvorrichtung 2 wird somit zusätzlich durch eine Klemmkraft gehalten. Damit ist eine langfristige Haltekraft auch bei einer möglicherweise durch Umwelteinflüsse degradierenden Abdichtung zwischen Saugnapfvorrichtung 2 und glatter Oberfläche 200 gegeben. Der Eingriffsbereich 230 ist insbesondere so ausgestaltet, dass er von der Form auf das Kugelelement 12 angepasst ist bzw. ein zumindest partieller Formschluss vorliegt.

Die Saugnapfvorrichtung 2 ist so besonders sicher an der Windschutzscheibe des Fahrzeuges gehalten. Insbesondere löst sich die Saugnapfvorrichtung somit nicht oder verrutscht auch bei größeren Lasten bzw. längeren Standzeiten nicht.

**Bezugszeichenliste**

| | | | |
|---|---|---|---|
| 2 | Saugnapfvorrichtung | 110 | Kugelgelenk |
| 4 | Gehäuse | 111 | Kugelgelenk |
| 6 | elastisches Element | 112 | Kugelgelenk |
| 8 | Spindel | 113 | Kugelgelenk |
| 9a | vorderer Abschnitt | | |
| 9b | hinterer Abschnitt | 120 | plattenförmiges Armelement |
| 10 | erstes plattenförmiges Element | 121 | plattenförmiges Armelement |
| | | 122 | plattenförmiges Armelement |
| 12 | Kugelelement | 123 | plattenförmiges Armelement |
| 13 | Anschlag | | |
| 14 | zweites plattenförmiges Element | 130 | Kugelelement |
| | | 131 | Kugelelement |
| 16 | Betätigungselement | 132 | Kugelelement |
| 18 | drittes plattenförmiges Element | | |
| | | 140 | Doppelkugel |
| | | | |
| 22 | Rand | 150 | Stellschraube |
| 24 | erstes Durchloch | 151 | Stellschraube |
| 26 | zweites Durchloch | | |
| 28 | drittes Durchloch | 160 | Grundplatte |
| 29 | viertes Durchloch | 161 | Klemmfinger |
| | | 162 | Klemmfinger |
| 30 | Kontaktfläche | 163 | Klemmfinger |
| 32 | erste Dichtfläche | | |
| 34 | zweite Dichtfläche | 200 | glatte Oberfläche |
| | | | |
| 40 | Bohrung | 210 | Fixierelement |
| | | 220 | Fixiermittel |
| 100 | Arm | 221 | Fixiermittel |
| 101 | Klemmvorrichtung | 230 | Eingriffsbereich |

## Patentansprüche

1. Saugnapfvorrichtung (2), insbesondere Saugnapfvorrichtung (2) für eine Haltevorrichtung für ein portables elektronisches Gerät, zum Aufsetzen auf eine glatte Oberfläche (200), insbesondere eine Glasscheibe, umfassend:
- ein Gehäuse (4) mit einem ersten Durchloch (24) und einem Rand (22),
- ein elastisches Element (6), welches teilweise innerhalb des Gehäuses (4) angeordnet ist und ein zweites Durchloch (26) aufweist, welches fluchtend mit dem ersten Durchloch (24) angeordnet ist,
- eine Spindel (8) und
- ein mit der Spindel (8) an einem Ende verbundenes erstes plattenförmiges Element (10), welches innerhalb des Gehäuses (4) angeordnet ist,
wobei die Spindel (8) sich durch das erste und zweite Durchloch (24, 26) erstreckt und die Saugnapfvorrichtung (2) so ausgelegt ist, dass mittels der Spindel (8) das erste plattenförmige Element (10) so gegen das elastische Element (6) in Richtung des Gehäuses (4) gezogen wird, dass zwischen der glatten Oberfläche (200) und dem elastischen Element (6) ein Unterdruck entsteht.

2. Saugnapfvorrichtung (2) nach Anspruch 1, wobei die Spindel (8) zwischen einem Nichtbenutzungszustand und einem Funktionszustand eine Längsbewegung ausführt.

3. Saugnapfvorrichtung (2) nach Anspruch 1 oder 2, wobei das elastische Element (6) ein kreisförmiges Element ist, welches insbesondere aus einem Gummi oder Gummi-ähnlichen Material, insbesondere transluzenten oder transparenten Material, hergestellt ist und/oder wobei das elastische Element (6) so angeordnet ist, dass das elastische Element (6) und ein äußerer Rand des Gehäuses (4) zumindest teilweise insbesondere vollständig überlappen.

4. Saugnapfvorrichtung (2) nach einem der vorhergehenden Ansprüche, wobei das erste plattenförmige Element (10) eine Kreisform aufweist, wobei das erste plattenförmige Element (10) vorzugsweise aus einem Kunststoff oder Metall gebildet ist und/oder wobei zwischen dem elastischen Element (6) und dem Gehäuse (4) ein drittes plattenförmiges Element (18) angeordnet ist, welches vorzugsweise aus einem Kunststoff oder Metall gebildet ist.

5. Saugnapfvorrichtung (2) nach einem der vorhergehenden Ansprüche, wobei das erste plattenförmige Element (10) einstückig mit der Spindel (8) ist und/oder wobei die Spindel (8) zumindest teilweise ein Gewinde aufweist.

6. Saugnapfvorrichtung (2) nach einem der vorhergehenden Ansprüche, wobei die Spindel (8) an einem zweiten Ende ein Kugelelement (12) aufweist und/oder wobei die Spindel (8) an einem zweiten Ende geeignet ist, mit einem Fixierelement in Eingriff gebracht zu werden.

7. Saugnapfvorrichtung (2) nach einem der vorhergehenden Ansprüche weiterhin umfassend ein Betätigungselement (16), welches zweckmäßigerweise ein Durchloch mit einem Gewinde aufweist, wobei das Betätigungselement (16) zwischen dem Gehäuse (4) und dem zweiten Ende auf der Spindel (8) angeordnet ist.

8. Saugnapfvorrichtung (2) nach einem der vorhergehenden Ansprüche, wobei das Gehäuse (4) an einer vom elastischen Element (6) abgewandten Seite einen um das zweite Durchloch (26) umlaufenden Vorsprung aufweist oder auf dem Gehäuse (4) ein zweites plattenförmiges Element (14) mit einem dritten Durchloch (28) angeordnet ist, wobei das dritte Durchloch (28) fluchtend mit dem ersten und zweiten Durchloch (24, 26) ausgerichtet ist.

9. Saugnapfvorrichtung (2) nach einem der vorhergehenden Ansprüche, wobei das elastische Element (6) mit dem Gehäuse (4) im auf eine glatte Oberfläche (200) aufgesetzten Zustand kraftschlüssig verbindbar ist.

10. Saugnapfvorrichtung (2) nach einem der vorhergehenden Ansprüche, wobei die Spindel (8) im Bereich des zweiten Endes eine oder mehrere Befestigungsmöglichkeiten insbesondere zur schraubbaren Befestigung von je einem weiteren Element aufweist, wobei das weitere Element zweckmäßigerweise mit einem Kugelelement versehen ist.

11. Saugnapfvorrichtung (2) nach einem der vorhergehenden Ansprüche, wobei das Gehäuse (4) eine oder mehrere Bohrungen (40), insbesondere mit einem Gewinde ausgestaltete Bohrungen, umfasst, welche zweckmäßigerweise in einem mittleren Bereich zwischen dem ersten Durchloch (24) und dem äußeren Rand (22) des Gehäuses (4) befinden.

12. Haltevorrichtung für ein elektronisches portables Gerät, insbesondere ein Navigationsgerät, mit einer Saugnapfvorrichtung (2) nach einem der Ansprüche 1 bis 11, insbesondere mit einem Kugelelement (12, 313), wobei mit der Saugnapfvorrichtung (2), insbesondere mit der Spindel (8) der Saugnapfvorrichtung (2) und/oder insbesondere mit dem Kugelelement (12), ein Arm (100) mit einem ersten Ende gelenkig verbunden ist, wobei an einem zweiten Ende des Arms (100) ein Halteelement (101) für das elektronische portable Gerät vorgesehen ist, wobei der Arm (100) aus einem oder mehreren Verbindungselementen besteht oder zumindest ein Verbindungselement umfasst.

13. Haltevorrichtung nach Anspruch 12, wobei der Arm (100) mit dem Halteelement (101) über ein Kugelgelenk (112) verbunden ist.

14. Haltevorrichtung nach Anspruch 12 oder 13, wobei der Arm (100) zumindest ein weiteres Gelenk, insbesondere Kugelgelenk (110, 111) aufweist, welches in einem mittleren Abschnitt des Armes (100) vorgesehen ist.

15. Haltevorrichtung nach einem der Ansprüche 12 bis 14, wobei das Haltelement eine Klemmvorrichtung ist, wobei die Klemmvorrichtung eine Grundplatte (160) und auf zwei sich gegenüberliegenden Seiten zumindest je einen Klemmfinger (161, 162, 163) umfasst.

16. Haltevorrichtung nach Anspruch 15, wobei die Grundplatte (160) genau drei Klemmfinger (161, 162, 163) umfasst, welche auf zwei sich gegenüberliegenden Seiten angeordnet sind.

17. Haltevorrichtung nach einem der Ansprüche 12 bis 16, wobei der Arm (100) ein Verbindungselement mit zwei sich gegenüberliegenden plattenförmigen Armelementen (120, 121, 122, 123) umfasst, welche jeweils an den Endabschnitten U-förmige oder C-förmige Ausnehmungen umfassen, wobei mit den sich gegenüberliegenden U-förmigen oder C-förmigen Ausnehmungen jeweils ein Kugelelement (12, 130, 131, 132) so gehalten wird, dass die zwei plattenförmigen Armelemente (120, 121, 122, 123) mit dem Kugelelement (12, 130, 131, 132) ein Kugelgelenk (110, 111, 112, 113) bilden.

18. Haltevorrichtung nach Anspruch 17, wobei ein Abstand der sich gegenüberliegenden plattenförmigen Armelemente (120, 121, 122, 123) durch eine Stellschraube (150, 151) begrenzt wird.

19. Haltevorrichtung nach einem der Ansprüche 12 bis 18, weiterhin umfassend ein Fixierelement (210), welches mit der Spindel (8) am zweiten Ende in Eingriff gebracht werden kann, wobei das Fixierelement (210) zumindest ein Fixiermittel (220, 221) aufweist, um am Armaturenbrett, Lüftungsschlitzen, insbesondere im Bereich der Windschutzscheibe, eines Fahrzeuges oder weiteren Vertiefungen, insbesondere im Bereich der Windschutzscheibe, eines Fahrzeuges lösbar befestigt zu werden, und einen Eingriffsbereich (230) aufweist, mit dem die Spindel (8) am zweiten Ende in Eingriff gebracht werden kann.

20. Haltevorrichtung nach Anspruch 19, wobei das Fixiermittel (220, 221) einen Vorsprung oder Haken umfasst, welcher dazu ausgelegt ist, in einen Lüftungsschlitz im Bereich der Windschutzscheibe einzugreifen oder einzuhaken und/oder der Eingriffsbereich U-Förmig ausgestaltet ist, so dass das Kugelelement der Spindel (8) damit in Eingriff gebracht werden kann.
